# EUROPEAN PATENT APPLICATION

(11) **EP 4 835 431 A1**
(43) Date of publication of application: **04.11.2026**
(21) Application number: 24912729.1
(22) Date of filing: 23.12.2024
(51) Int. Cl.: G01M 13/04, F16H 25/22, F16H 25/24, F16N 29/00, F16N 29/02

(54) **LUBRICATION STATE DIAGNOSIS DEVICE, DIAGNOSIS METHOD, AND PROGRAM**

(30) Priority: 28.12.2023 JP 2023223379
(71) Applicant: NSK Ltd., Tokyo 141-8560 (JP)
(72) Inventor: NAGAI, Yutaka, Fujisawa-shi, Kanagawa 251-8501 (JP)
(74) Representative: Grünecker Patent- und Rechtsanwälte PartG mbB
(86) International application number: PCT/JP2024/045473
(87) International publication number: WO 2025/142842

(57) **Abstract**

Provided is a diagnosis device for diagnosing a rolling device in which a lubricant is used, the diagnosis device including: an acquisition means for acquiring, by using an electric impedance method, the impedance and the phase of the rolling device in a stopped state after the rolling device starts rotating and prescribed rotation is performed; a derivation means for deriving, from the impedance and the phase, the thickness of a film originating from the lubricant in the rolling device; and a determination means for determining the lubrication state of the rolling device on the basis of the thickness of the film.

## Description

### TECHNICAL FIELD

The present invention relates to a lubrication state diagnosis method, a diagnosis device, and a program.

### BACKGROUND ART

In the related art, in a rolling device such as a ball screw, a configuration has been used in which a lubricant is used to lubricate an operation thereof. In the device having such a configuration, a stable operation is achieved by appropriately grasping and managing the lubrication state.

As a method for monitoring the lubrication state, there is a method using an electrical impedance method. For example, Patent Literature 1 describes a method of deriving an oil film thickness and electrical characteristics using an AC power supply in a device that performs lubrication with a lubricant.

### CITATION LIST

### PATENT LITERATURE

Patent Literature 1: JP7057868B

### SUMMARY OF INVENTION

### TECHNICAL PROBLEM

When the lubrication state of the rolling device using the lubricant is measured, a method for measuring the lubrication state in a state in which the rotation operation of the rolling device is stopped is also required. For example, in a vehicle device or the like, there is a demand for grasping a lubrication state when an operation is stopped.

In view of the above problem, an object of the present invention is to provide a method capable of measuring a lubrication state in a state in which a rotation operation of a rolling device is stopped.

### SOLUTION TO PROBLEM

In order to solve the above problem, the present invention has the following configuration. That is, a diagnosis device for diagnosing a rolling device using a lubricant includes:
an acquisition unit configured to acquire, using an electrical impedance method, an impedance and a phase of the rolling device in a state in which the rolling device starts to rotate and stops after a predetermined rotation is performed;
a derivation unit configured to derive a thickness of a film derived from the lubricant in the rolling device from the impedance and the phase; and
a determination unit configured to determine a lubrication state of the rolling device based on the thickness of the film.

Another aspect of the present invention has the following configuration. That is, a diagnosis method for diagnosing a rolling device using a lubricant includes:
an acquisition step of acquiring, using an electrical impedance method, an impedance and a phase of the rolling device in a state in which the rolling device starts to rotate and stops after a predetermined rotation is performed;
a derivation step of deriving a thickness of a film derived from the lubricant in the rolling device from the impedance and the phase; and
a determination step of determining a lubrication state of the rolling device based on the thickness of the film.

Another aspect of the present invention has the following configuration. That is, a program causes a computer to execute:
an acquisition step of acquiring, using an electrical impedance method, an impedance and a phase of the rolling device in a state in which the rolling device starts to rotate and stops after a predetermined rotation is performed;
a derivation step of deriving a thickness of a film derived from the lubricant in the rolling device from the impedance and the phase; and
a determination step of determining a lubrication state of the rolling device based on the thickness of the film.

### ADVANTAGEOUS EFFECTS OF INVENTION

According to the present invention, it is possible to measure a lubrication state in a state in which a rotation operation of a rolling device is stopped.

### BRIEF DESCRIPTION OF DRAWINGS

[FIG. 1] FIG. 1 is a schematic diagram showing a configuration example of a diagnosis system according to an embodiment of the present invention.
[FIG. 2] FIG. 2 is a flowchart of diagnosis processing according to the embodiment of the present invention.
[FIG. 3] FIG. 3 is a graph showing an example of test results according to the embodiment of the present invention.
[FIG. 4] FIG. 4 is a graph showing an example of test results according to the embodiment of the present invention.
[FIG. 5] FIG. 5 is a graph showing an example of test results according to the embodiment of the present invention.

### DESCRIPTION OF EMBODIMENTS

Hereinafter, embodiments of the present invention will be described with reference to the drawings. The embodiments described below are embodiments for explaining the present invention, and are not intended to be interpreted to limit the present invention, and all the configurations described in the embodiments are not necessarily essential configurations for solving the problems of the present invention. In the drawings, the same components are denoted by the same reference signs, thereby showing a correspondence relation therebetween.

### <First Embodiment>

Hereinafter, a first embodiment of the present invention will be described. In the present embodiment, a ball screw will be described as an example of a rolling device that performs a rotation operation using a lubricant. However, the present invention is not limited thereto, and other rolling devices may be used as long as the lubrication state can be monitored as described later. A mechanical device on which the rolling device is mounted is not particularly limited, and can be applied to any device such as a vehicle or a machine tool.

### [System Configuration]

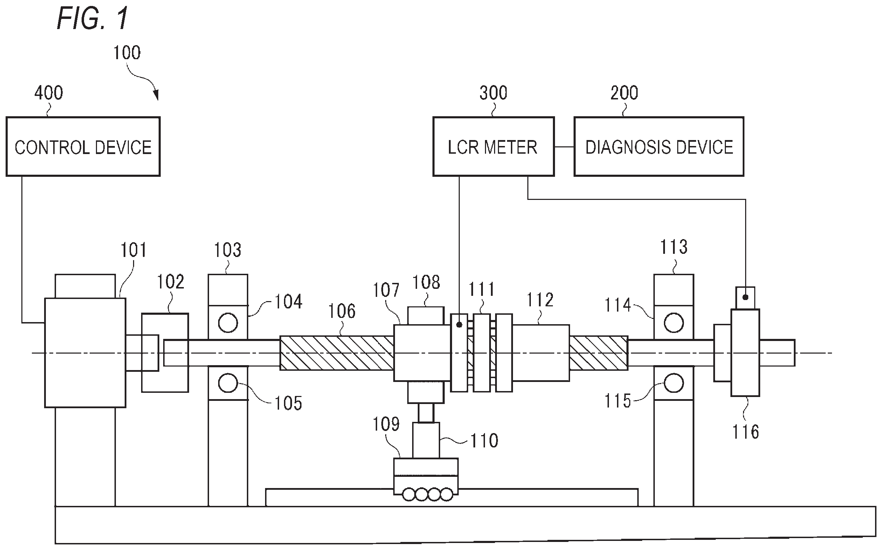

FIG. 1 is a schematic diagram of a system configuration to which a lubrication state diagnosis method according to the present embodiment is applicable. Here, a mechanical device 100 including a ball screw (BS) to be diagnosed is shown. The system further includes a diagnosis device 200, an LCR meter 300, and a control device 400. The mechanical device 100 is shown as an example of a configuration used as a test environment for diagnosing the lubrication state according to the present embodiment, and may have a configuration different from that of an actual mechanical device on which the rolling device to be diagnosed is mounted.

The mechanical device 100 includes a motor 101, a coupling 102, a bearing housing 103, a support bearing 104, a BS shaft 106, a BS nut 107, an anti-rotation jig 108, an anti-rotation guide 109, a joint 110, a spring load jig 111, a BS nut 112, a bearing housing 113, a support bearing 114, and a slip ring 116.

The bearing housings 103 and 113 support the support bearings 104 and 114, respectively. A rolling element 105 of the support bearing 104 and a rolling element 115 of the support bearing 114 are formed of ceramic balls and are electrically insulated from the bearing housings 103 and 113. The BS nut 107 is in an insulated state using a joint that acts as an insulator (for example, resin) between the anti-rotation jig 108 and the anti-rotation guide 109.

The diagnosis device 200 is an information processing device for executing state diagnosis processing according to the present embodiment. The diagnosis device 200 includes a control unit, a storage unit, an interface (IF) unit, a user interface (UI) unit, and a communication unit (not shown). The diagnosis device 200 may be implemented as, for example, a general-purpose information processing device such as a personal computer (PC) or may be implemented as a dedicated device.

The control unit of the diagnosis device 200 may include a central processing unit (CPU), a micro processing unit (MPU), a digital single processor (DSP), and a dedicated circuit. The storage unit includes volatile and nonvolatile storage media such as a hard disk drive (HDD), a read only memory (ROM), and a random access memory (RAM), and may input and output various types of information in response to an instruction from the control unit.

The IF unit is an interface for connecting to an external device, and in the present embodiment, can transmit and receive data to and from the LCR meter 300. The UI unit receives an operation from a user and displays various types of information such as a measurement result. The UI unit includes a speaker, a light, or a display device such as a liquid crystal display, and executes output to the user in response to an instruction from the control unit. An output method by the UI unit is not particularly limited, and may be, for example, visual output by screen output or auditory output by voice. The communication unit is a network interface for communicating with an external device.

The LCR meter 300 is electrically connected to the ball screw via the BS nut 107 and the slip ring 116. Then, the LCR meter 300 applies an AC power supply to the BS nut 107 and the slip ring 116 to measure an impedance Z and a phase θ. The LCR meter 300 provides a measurement result to the diagnosis device 200 as appropriate. The measurement result obtained by the LCR meter 300 is managed by an information processing device 200.

The control device 400 generates a control signal for the motor 101 and controls the rotation operation of the ball screw. In the present embodiment, the control device 400 is implemented separately from the diagnosis device 200. Alternatively, the control device 400 and the diagnosis device 200 may be integrated.

In the present embodiment, a lubricant is used to lubricate the rotation operation of the ball screw. The lubricant is sealed around rolling elements (not shown) provided inside the BS nut 107 and the BS nut 112. In the present embodiment, grease is used as the lubricant.

### [diagnosis Processing]

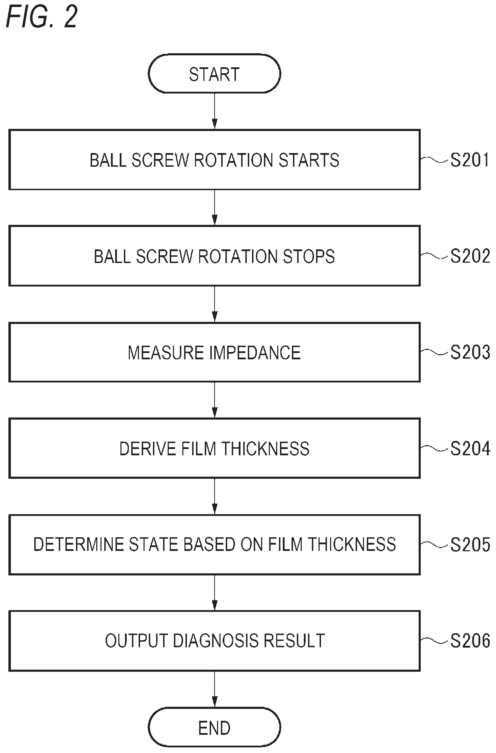

In the lubrication state diagnosis method according to the present embodiment, after the rolling device is operated to a certain extent, the rotation operation is stopped, and then the lubrication state is diagnosed. FIG. 2 is a flowchart of diagnosis processing according to the present embodiment. This processing is executed by the diagnosis device 200, and may be implemented by, for example, the control unit in the diagnosis device 200 reading out a program for implementing the processing according to the present embodiment from the storage unit and executing the program. This processing flow may be executed at any timing based on a user instruction.

In S201, the diagnosis device 200 causes the ball screw to rotate under a predetermined condition. The rotation operation of the ball screw may be controlled by the diagnosis device 200 cooperating with the control device 400.

In S202, the diagnosis device 200 stops the rotation operation of the ball screw. The rotation operation of the ball screw may be controlled by the diagnosis device 200 cooperating with the control device 400.

In S203, the diagnosis device 200 executes measurement using the LCR meter 300 and acquires information on the impedance Z and the phase θ.

In S204, the diagnosis device 200 derives the thickness of the film in the ball screw using the impedance Z and the phase θ that are acquired in S204. The film here is a film formed on the rolling surface of the ball screw due to the lubricant. As a method for calculating the thickness of the film using the impedance Z and the phase θ, for example, a known method such as JP7099551B by the present applicant may be used.

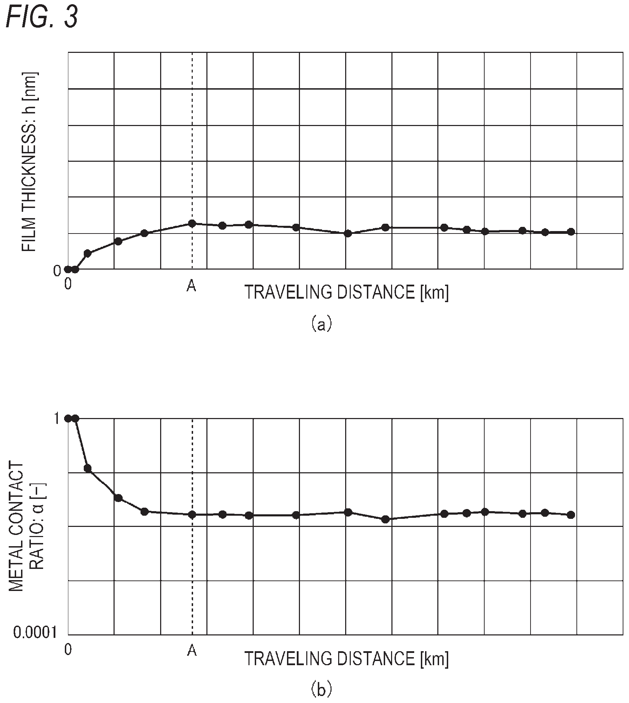

In S205, the diagnosis device 200 determines the state based on the film thickness derived in S204. A specific example of the state determination here will be described later using test results in FIGS. 3 to 5.

In S206, the diagnosis device 200 outputs the result of the state determination executed in S205 as a diagnosis result. Then, this processing flow ends.

### [Test Examples]

FIGS. 3 to 5 show test examples for verifying the lubrication state diagnosis method according to the present embodiment. The tests use a system configuration example shown in FIG. 1. The test conditions were as follows.
Diagnosis target: ball screw (double nut type), with ball holding piece
Lubricant: grease (lithium soap-based), initially sealed only (no additional lubrication during use)
Nut outer diameter temperature [°C]: 80 (temperature adjustment by external device)
Stroke [mm]: 60
Rotation speed [min⁻¹]: 1500
Applied AC frequency [MHz]: 1
Applied AC voltage [V]: 1.5

In the present test example, at the time of measurement, the ball screw is stopped at the stroke start position of the ball screw for a certain time, and then the ball screw is rotated at each rotation speed to travel. Then, after the rotation is stopped (0 min⁻¹) at a timing of any travel distance, the impedance Z and the phase θ are measured by the electrical impedance method. Then, a film thickness h and a metal contact ratio α that are derived from the lubricant are derived by a known method using the impedance Z and the phase θ. Vibration, torque, and temperature for detecting seizure were measured by a known method, and the presence or absence of peeling of the rolling surface of the screw shaft and the progress thereof were periodically and visually determined.

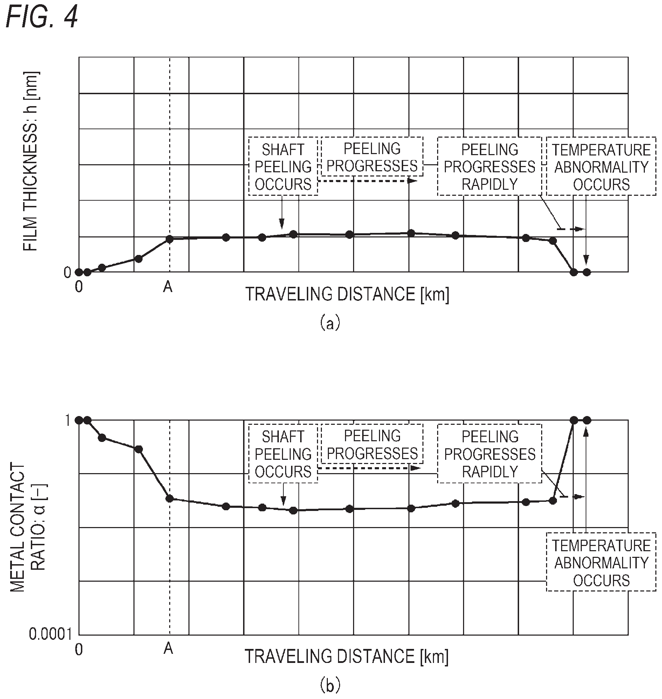

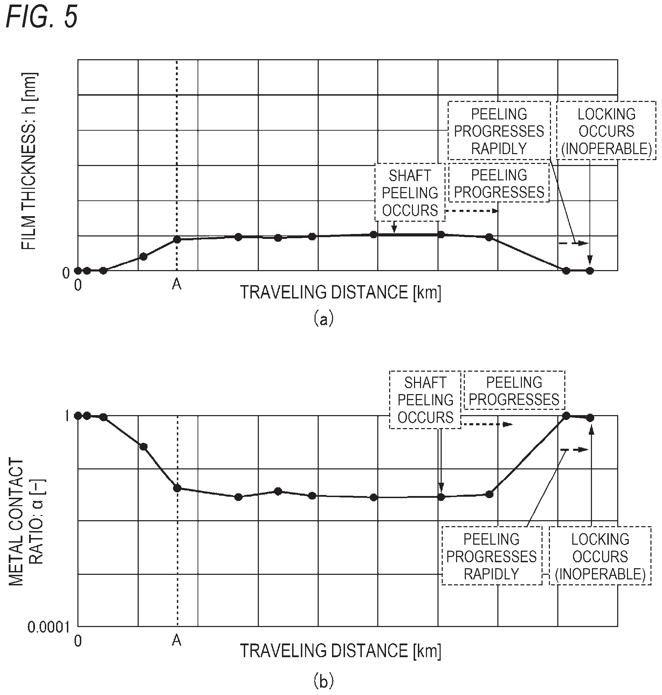

FIGS. 3 to 5 are examples of test results. In (a) of FIG. 3, (a) of FIG. 4, and (a) of FIG. 5, the vertical axis represents the film thickness h [nm] derived from the lubricant, and the horizontal axis represents the travel distance [km]. In (b) of FIG. 3, (b) of FIG. 4, and (b) of FIG. 5, the vertical axis represents the metal contact ratio α [-] in logarithm, and the horizontal axis represents the travel distance [km]. In the graph, the plot indicates the timing when the rotation is stopped and the measurement is performed.

FIG. 3 shows an example in which no peeling occurs during the test. FIG. 4 is an example in which peeling occurs during the test, and as a result, a temperature abnormality occurs. FIG. 5 shows an example in which peeling occurs during the test and locking (inoperable) occurs.

Referring to the results of FIGS. 3 to 5, as an overall tendency, the value of the film thickness h is 0 at the start of the test (travel distance: 0 km), and the value gradually increases as the travel distance increases. The value of the film thickness h is stable after a predetermined travel distance. In the examples in FIGS. 3 to 5, the film thickness h is stable after the fifth measurement (the fifth plot from the left) indicated by A. In the present embodiment, the measurement is performed in a state in which the rotation is stopped (rotation speed: 0 min⁻¹). At this time, as shown in FIGS. 3 to 5, formation of a film derived from the lubricant (the grease) is confirmed even in a state in which the rotation is stopped. Such a film is considered to be formed by, for example, an additive such as a thickener contained in the lubricant.

As shown in FIG. 3, a case will be referred to in which the occurrence of peeling or the rapid progress thereof does not occur. In this state, even when the rotation is stopped and the film thickness h is measured, the value is stable in a certain range.

On the other hand, as shown in FIGS. 4 and 5, reference is made to a case in which the occurrence of peeling or the rapid progress thereof occurs. In these states, when the film thickness h is measured in a state in which peeling occurs, the value of the film thickness h remains stable in a certain range. However, the film thickness h decreases when the peeling progresses rapidly. Further, an abnormality (for example, a temperature abnormality or locking) occurs after the film thickness h becomes 0. Therefore, by grasping the decrease in the film thickness h after the film thickness h becomes stable, it is possible to diagnose the lubrication state even in the state in which the rotation is stopped. In other words, by capturing the decrease in the film thickness, it is possible to diagnose the decrease as a sign of abnormality occurrence.

With reference to FIGS. 4 and 5, the film thickness h decreases not immediately after the occurrence of the peeling but after the peeling progresses to a certain extent. Even when the film thickness h becomes 0, no abnormality occurs immediately. Therefore, the lubrication state may be diagnosed based on the degree of decrease in the film thickness h, the elapsed time, and the like. Based on a change from an increase to stabilization of the film thickness h from the traveling distance of 0 km, it may be possible to diagnose the initial wear at the initial stage of operation or whether the lubricant break-in at the initial stage of operation has progressed well.

For example, when the state is determined in S205 in FIG. 2, the diagnosis may be executed assuming that an abnormality occurs when the film thickness h falls below a predetermined threshold value. Alternatively, the rotation is periodically stopped and measured a plurality of times, and the film thickness h indicating a stable value is derived as a reference. Here, the stable value may mean, for example, a state in which the variation (increase or decrease) of the film thickness h is within a predetermined range in a plurality of consecutive measurements. In this state, the latest film thickness h may be used as a reference. Then, at the time when the newly measured film thickness falls below a predetermined ratio with respect to the reference, it may be diagnosed that an abnormality has occurred or an abnormality may occur. The degree of urgency of the abnormality occurrence may be diagnosed based on the decrease rate of the value of the film thickness h or the lapse of time after the value becomes 0.

As described above, with the configuration of the present embodiment, it is possible to measure a lubrication state in a state in which a rotation operation of a rolling device is stopped.

### <Other Embodiments>

In the present invention, a program or an application for implementing functions of the one or more embodiments described above may be supplied to a system or a device using a network or a storage medium, and processing in which one or more processors in a computer of the system or the device read and execute the program may be implemented.

The functions may be implemented by a circuit (for example, an application specific integrated circuit (ASIC) or a field programmable gate array (FPGA)) that implements one or more functions.

As described above, the present invention is not limited to the embodiments described above, and combinations of the configurations of the embodiments and changes and modifications made by those skilled in the art based on the descriptions in the description and the well-known technique are intended by the present invention and are thus also included within the scope of the present invention to be protected.

As described above, the following matters are disclosed in the present description.
(1) A diagnosis device (for example, 200) for diagnosing a rolling device (for example, 100) using a lubricant, the diagnosis device including:
   an acquisition unit (for example, 200, 300) configured to acquire, using an electrical impedance method, an impedance and a phase of the rolling device in a state in which the rolling device starts to rotate and stops after a predetermined rotation is performed;
   a derivation unit (for example, 200) configured to derive a thickness of a film derived from the lubricant in the rolling device from the impedance and the phase; and
   a determination unit (for example, 200) configured to determine a lubrication state of the rolling device based on the thickness of the film.
   According to this configuration, it is possible to measure a lubrication state in a state in which a rotation operation of a rolling device is stopped.
(2) The diagnosis device according to (1),
   in which the determination unit determines that there is a sign of occurrence of an abnormality when the thickness of the film falls below a predetermined threshold value.
   According to this configuration, the sign of the abnormality can be captured based on the detected thickness of the film.
(3) The diagnosis device according to (1),
   in which the determination unit specifies a thickness serving as a reference based on the thickness of the film obtained by the plurality of times of derivation by the derivation unit, and determines that there is a sign of occurrence of an abnormality when a newly derived thickness of the film is smaller than a predetermined ratio with respect to the reference.
   According to this configuration, the sign of the abnormality can be captured by capturing a decrease change in the previously stable thickness of the film.
(4) The diagnosis device according to (3),
   in which the reference is a latest thickness of the film in a state in which a variation in the thickness of the film obtained by a plurality of times of derivation by the derivation unit is within a predetermined range.
   According to this configuration, the sign of the abnormality can be captured by capturing a decrease change in the thickness of the film with respect to the reference obtained based on the results of the plurality of measurements.
(5) The diagnosis device according to any one of (1) to (4),
   in which the lubricant is grease containing an additive.
   According to this configuration, the sign of the abnormality can be captured based on the variation in the thickness of the film derived from the additive contained in the grease.
(6) The diagnosis device according to any one of (1) to (4),
   in which the rolling device is a ball screw.
   According to this configuration, the state can be diagnosed on the ball screw using the lubricant.
(7) A diagnosis method for diagnosing a rolling device (for example, 100) using a lubricant, the diagnosis method including:
   an acquisition step of acquiring, using an electrical impedance method, an impedance and a phase of the rolling device in a state in which the rolling device starts to rotate and stops after a predetermined rotation is performed;
   a derivation step of deriving a thickness of a film derived from the lubricant in the rolling device from the impedance and the phase; and
   a determination step of determining a lubrication state of the rolling device based on the thickness of the film.
   According to this configuration, it is possible to measure a lubrication state in a state in which a rotation operation of a rolling device is stopped.
(8) A program for causing a computer (for example, 200) to execute:
   an acquisition step (for example, 200) of acquiring, using an electrical impedance method, an impedance and a phase of the rolling device in a state in which the rolling device starts to rotate and stops after a predetermined rotation is performed;
   a derivation step (for example, 200) of deriving a thickness of a film derived from the lubricant in the rolling device from the impedance and the phase; and
   a determination step (for example, 200) of determining a lubrication state of the rolling device based on the thickness of the film.
   According to this configuration, it is possible to measure a lubrication state in a state in which a rotation operation of a rolling device is stopped.

Although the embodiments are described above with reference to the drawings, it is needless to mention that the present invention is not limited to these examples. It is apparent to those skilled in the art that various changes or modifications can be conceived within the scope described in the claims, and it is understood that the changes or modifications naturally fall within the technical scope of the present invention. In addition, the components described in the embodiments described above may be combined in any manner without departing from the spirit of the invention.

The present application is based on a Japanese patent application (No. 2023-223379) filed on December 28, 2023, contents of which are incorporated herein by reference.

### REFERENCE SIGNS LIST

100: mechanical device
101: motor
102: coupling
103: bearing housing
104: support bearing
105: rolling element
106: BS shaft
107: BS nut
108: anti-rotation jig
109: anti-rotation guide
110: joint
111: spring load jig
112: BS nut
113: bearing housing
114: support bearing
115: rolling element
116: slip ring
200: diagnosis device
300: LCR meter
400: control device

## Claims

1. A diagnosis device for diagnosing a rolling device using a lubricant, the diagnosis device comprising:
an acquisition unit configured to acquire, using an electrical impedance method, an impedance and a phase of the rolling device in a state in which the rolling device starts to rotate and stops after a predetermined rotation is performed;
a derivation unit configured to derive a thickness of a film derived from the lubricant in the rolling device from the impedance and the phase; and
a determination unit configured to determine a lubrication state of the rolling device based on the thickness of the film.

2. The diagnosis device according to claim 1,
wherein the determination unit determines that there is a sign of occurrence of an abnormality when the thickness of the film falls below a predetermined threshold value.

3. The diagnosis device according to claim 1,
wherein the determination unit specifies a thickness serving as a reference based on the thickness of the film obtained by the plurality of times of derivation by the derivation unit, and determines that there is a sign of occurrence of an abnormality when a newly derived thickness of the film is smaller than a predetermined ratio with respect to the reference.

4. The diagnosis device according to claim 3,
wherein the reference is a latest thickness of the film in a state in which a variation in the thickness of the film obtained by a plurality of times of derivation by the derivation unit is within a predetermined range.

5. The diagnosis device according to claim 1,
wherein the lubricant is grease containing an additive.

6. The diagnosis device according to claim 1,
wherein the rolling device is a ball screw.

7. A diagnosis method for diagnosing a rolling device using a lubricant, the diagnosis method comprising:
an acquisition step of acquiring, using an electrical impedance method, an impedance and a phase of the rolling device in a state in which the rolling device starts to rotate and stops after a predetermined rotation is performed;
a derivation step of deriving a thickness of a film derived from the lubricant in the rolling device from the impedance and the phase; and
a determination step of determining a lubrication state of the rolling device based on the thickness of the film.

8. A program for causing a computer to execute:
an acquisition step of acquiring, using an electrical impedance method, an impedance and a phase of the rolling device in a state in which the rolling device starts to rotate and stops after a predetermined rotation is performed;
a derivation step of deriving a thickness of a film derived from the lubricant in the rolling device from the impedance and the phase; and
a determination step of determining a lubrication state of the rolling device based on the thickness of the film.
